Europäisches Patentamt

European Patent Office

Office européen des brevets

(11) Publication number: **0 327 961**
**A2**

(12) **EUROPEAN PATENT APPLICATION**

(21) Application number: 89101793.1

(22) Date of filing: 02.02.89

(51) Int. Cl.4: **H04M 11/02 , H04M 1/64**

(30) Priority: 02.02.88 IT 6706688

(43) Date of publication of application:
16.08.89 Bulletin 89/33

(84) Designated Contracting States:
**DE ES FR GB**

(71) Applicant: URMET S.p.A. Costruzioni
Elettro-Telefoniche
Via Bologna 188/C
I-10154 Torino(IT)

(72) Inventor: **Mondardini, Massimo**
**Via Mazzini 40**
**I-10123 Torino(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) Static-component electronic device associable with individual house-phone sets with additional function of automatic house-phone answering system.

(57) A static-component electronic device with house-phone answering function, constituted by an additional modular element (EM) individually arrangeable next to each house-phone set (CTK) of the system by means of mechanical and electric connection elements and comprising integrated-circuit voice synthesizer means (SV), at least one probe (SO) for activating the synthesizer means, sensitive to the call signal arriving from the external post; a switching interface (IN) for selectively inserting on the line the synthesizer means or the house-phone set, as well as to connect the means and the set; and a local power supply circuit (ALK) capable of energizing the device both by means of the mains voltage and by means of the remote power supply of the house-phone system.

Fig. 1

Fig. 2

# STATIC-COMPONENT ELECTRONIC DEVICE ASSOCIABLE WITH INDIVIDUAL HOUSE-PHONE SETS WITH ADDITIONAL FUNCTION OF AUTOMATIC HOUSE-PHONE ANSWERING SYSTEM

The present invention relates to a static-component electronic device associable with the individual sets of a house-phone or house-picturephone system of the known type comprising an external post with a remotely controlled door-opener and a plurality of house-phone sets, with a possible television monitor, located in the various apartments of a building or the like.

The aim of the present invention is to improve systems of the above described type by providing them with an additional and optional answering function which consists at least of the issuing of a message answering the user calling from the external post in the absence of the called user.

Within the scope of this general aim, a further important and particular object of the present invention is to provide an extremely simple device, the adoption whereof requires no modification of the circuital arrangement of the connections between the external post and the individual sets.

According to the present invention, this aim and this important object, as well as others which will become apparent from the following detailed description, are achieved by providing an additional modular element which can be individually arranged next to each house-phone set of the system with mechanical and electric connection means and comprises integrated-circuit voice synthesizer means, at least one probe for activating said synthesizer means sensitive to the call signal arriving from the external post, a switching interface for selectively inserting on the line the synthesizer means or the house-phone set and for connecting between said means and said set, and a local power supply circuit capable of energizing the device both by means of the mains voltage and by means of the remote power supply of the house-phone system.

Further characteristics, purposes and advantages will become apparent from the following detailed description and with reference to the accompanying drawings, given by way of non-limitative example, wherein:

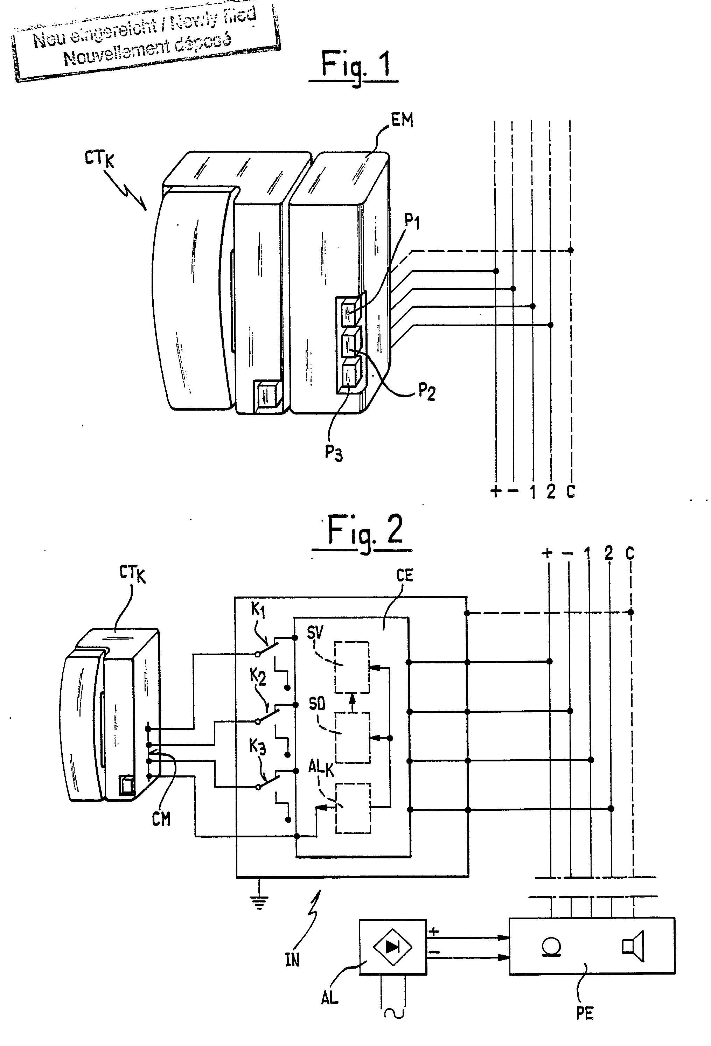

figure 1 is an isometric view of the house-phone set and of the device according to the invention associated therewith;

figure 2 is a block diagram of the device and of the interface for connection to the house phone set;

figure 3 is a detailed diagram of the voice synthesizer means and of their connection to the receiver of the house-phone set;

figure 4 is a detailed electric diagram of the activation probe of the synthesizer means;

figure 5 is a detailed diagram of the power supply circuit.

In the drawings, CTK indicates the general house-phone set of a system comprising a plurality of sets CT1...CTn and an external post PE.

The illustrated example relates to a system with exclusively audio transmission, but the invention is equally applicable to house-picturephone system using a closed-circuit television system comprising a TV camera associated with the external post and a plurality of TV monitors, each associated with each house-phone set.

According to the present invention, an additional modular element EM is individually arrangeable next to each set CTK to which it is connected mechanically, for example by means of a bracket (not illustrated) or of a snap-on retention device or in another known and equivalent manner, and electrically by means of a multipolar connector CM.

The additional element EM provides an optional answering service which consists of the on-line emission of a spoken answering message in the absence of the called user and of the possible memorization of a message left by the calling user.

For this purpose, the element EM has an electronic circuit CE with static components comprising voice synthesizer means SV, a probe SO for activating said means, sensitive to the call signal arriving from the external post on the dedicated conductor and a local power supply circuit ALK capable of autonomously supplying the element EM both by means of the mains voltage and by means of the voltage produced by the power supply AL of the system associated with the external post PE.

The circuit CE is connected, by means of an interface IN, to the + and - power supply conductors and to the audio signal conductors 1-2 of the system on one side and to the house-phone set CTK on the other side, with switches K1-K2-K3 interposed and actuated by respective pushbuttons P1-P2-P3 arranged frontally to the element EM.

For one of the two configurations (not illustrated), the switches bypass the circuit CE and directly connect the set CTK to the line conductors. In the other configuration the circuit CE is connected to the house-phone set, and the function of the connection pushbuttons is the following:
- P1 enables the recording of the message;
- P2 activates the answering function of the circuit;
- P3 allows to listen to the recorded and memorized messages.

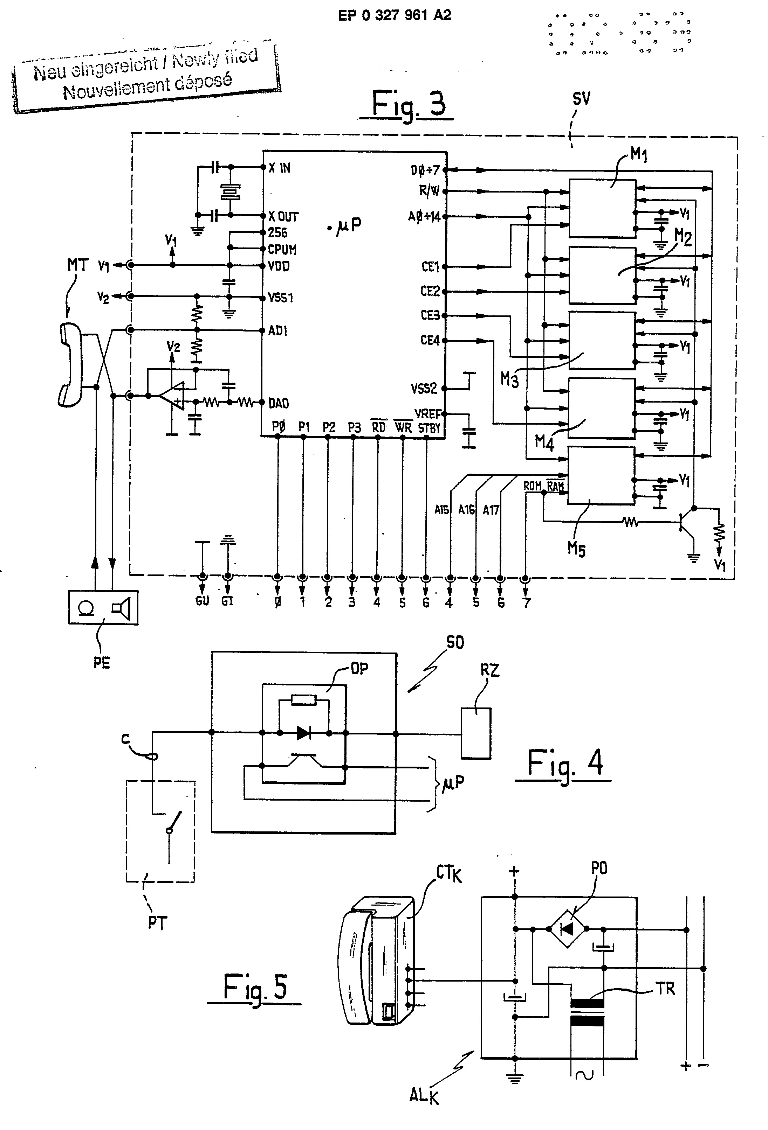

As illustrated in the diagram of figure 3, the voice synthesizer means SV are constituted by a dedicated integrated circuit μP; in the illustrated example they are constituted by the T 8830 microprocessor by Toshiba Co., which is described in detail in the publication "Integrated Circuit Technical Data 8830 F" published by Toshiba Co. in December 1986.

The diagram illustrates the output DAO (Digital Analogic Output) of the integrated circuit, to which an amplifier network is connected for revealing the emitted digital signal; the working signal being transduced into a spoken message by the receiver MT of the house-phone set for playback or by the loudspeaker of the external post PE to emit the recorded answering signal.

The audio signal to be recorded, arriving from the receiver MT of the set, reaches the input ADI (Analogic Digital Input) of the microprocessor. The digitized signal is memorized by the microprocessor in a bank of RAM memories M1-M4. A further ROM memory M5 is preset to store possible non-erasable phrases or sentances, for example guide phrases.

The normally idle microprocessor μP is activated by the call signal by means of the probe SO after presetting the switch K2 by actuating the device insertion pushbutton P2.

For this purpose, the probe SO (figure 4) is constituted by an opto-isolator OP inserted in series on the call conductor C leading to the buzzer RZ at one end and to the button panel PT of the external post at the other.

The power supply of the electronic circuit CE of the device can be taken from the + and - conductors of the system, as illustrated in the diagram of figure 5, wherein it can be seen that the power supply ALK however has a transformer TR which can be connected to the mains power and a bridge PO; these two elements allow to locally and independently supply power to the individual installed devices, and the transformer and the bridge are electrically in parallel to the + and - power supply conductors of the system.

In the above description, the device, when activated by insertion by means of the switch K2, inserts the DAO output of the microprocessor on the line conductors, essentially operating as an answering system to send the previously recorded answering message to the external post PE. However, it is evident that by providing adequate RAM memory banks such as M1-M4 it is possible to make the device act as a true answering machine by simply connecting the input ADI of the microprocessor μP to the microphone capsule of the external post PE. This connection is advantageously performed by means of an electronic or electromechanical relay by the calling probe SO which, besides activating the device as a whole, presets said connection between the logical input of the microprocessor and the external post PE. The recorded messages can be heard by activating the pushbutton P1 as described above.

The details of execution and the embodiments may naturally be extensively varied with respect to what is described and illustrated by way of non-limitative example without thereby abandoning the scope of the invention and without altering the concept of said invnetion.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Static-component electronic device with house-phone answering function, characterized in that it is constituted by an additional modular element individually arrangeable next to each house-phone set of the system by means of mechanical and electric connection elements and comprising integrated-circuit voice synthesizer means, at least one probe for activating said synthesizer means, said probe being sensitive to the call signal arriving from the external post; a switching interface for selectively inserting on the line the synthesizer means of the house-phone set, as well as for connecting said means and said set, and a local power supply circuit capable of energizing the device both by means of the mains voltage and by means of the remote power supply of the house-phone system.

2. Electronic device according to claim 1, characterized in that said interface comprises at least three switches actuated by respective pushbuttons arranged frontally with respect to the additional element and respectively intended to enable the recording of the answering message, to activate the answering function, and to allow to listen to the recorded and memorized messages.

3. Electronic device according to claims 1 and 2, wherein the voice synthesizer means are constituted by a dedicated integrated circuit, preferably by the T8830 (Toshiba) microprocessor, one or more RAM memory banks cooperating therewith to memorize the digitized audio signals together with at least one ROM memory for memorizing non-erasable phrases.

4. Electronic device according to the preceding claims, characterized in that the digital-analogic output of the microprocessor can be switched on the receiver of the set to play back on the recorded messages and to listen to the memorized ones and the analogic-digital input of the microprocessor is switchable on the receiver of the set or on the microphone capsule of the external post of the system to record the answering messages or respectively to memorize the calling messages.

5. Electronic device according to claim 1, characterized in that said activation probe is constituted by an opto-isolator inserted on the calling conductor which energizes the buzzer and is adapted to activate the microprocessor with the useful output signal to send answer messages on the line and to memorize calling messages.

6. Electronic device according to claim 1, wherein said local power supply comprises a transformer insertable on the mains network and cooperating with a rectifier, wherein said transformer and rectifier are arranged electrically in parallel to the power supply conductors of the system.

EP 0 327 961 A2

## Fig. 1

## Fig. 2

## Fig. 3

## Fig. 4

## Fig. 5